Europäisches Patentamt

European Patent Office

Office européen des brevets

(19)

(11) Veröffentlichungsnummer : **0 045 105**
**B1**

(12) **EUROPÄISCHE PATENTSCHRIFT**

(45) Veröffentlichungstag der Patentschrift :
28.11.84

(21) Anmeldenummer : 81200774.8

(22) Anmeldetag : 07.07.81

(51) Int. Cl.³ : **H 02 H  3/28**// H02H7/045,
H02H1/04

(54) Verfahren und Einrichtung für den Differentialschutz von elektrischen Anlagen.

(30) Priorität : 28.07.80 CH 5752/80

(43) Veröffentlichungstag der Anmeldung :
03.02.82 Patentblatt 82/05

(45) Bekanntmachung des Hinweises auf die Patenterteilung : 28.11.84 Patentblatt 84/48

(84) Benannte Vertragsstaaten :
CH DE LI NL

(56) Entgegenhaltungen :
DE-A- 2 339 931
DE-A- 2 905 195
FR-A- 2 239 791
FR-A- 2 363 925

(73) Patentinhaber : BBC Aktiengesellschaft Brown,
Boveri & Cie.
Haselstrasse
CH-5401 Baden (CH)

(72) Erfinder : Ilar, Majda, geb. Kramer
Weststrasse 10
CH-5432 Neuenhof (CH)
Erfinder : Schilling, Robert
Loonstrasse 4
CH-5443 Niederrohrdorf (CH)

## Beschreibung

Die Erfindung bezieht sich auf ein Verfahren für den Differentialschutz von elektrischen Anlagen nach dem Oberbegriff des Anspruchs 1. Die Erfindung bezieht sich ferner auf eine Einrichtung zur Durchführung eines solchen Verfahrens mit beiderseits des Schutzobjektes in dem zu überwachenden Stromkreis angeordneten Strom-Messgliedern, die an einen Differenzbildner für die Erzeugung eines Differenzstromsignals mit nachgeordneter Überwachungsschaltung angeschlossen sind.

Mit dem Oberbegriff nimmt die Erfindung auf einen Stand der Technik von Verfahren und Einrichtungen für den Differentialschutz von elektrischen Anlagen Bezug, wie er in der DE-A-2 339 931 beschrieben ist. Dort wird zur Überwachung eines Leitungsabschnittes eine der geometrischen Summe der dem Leitungsabschnitt zufliessenden Ströme und der aus dem Leitungsabschnitt abfliessenden Ströme entsprechende Messgröse (Differenzstromsignal, Auslösegrösse) und eine der arithmetischen Summe der zu- und abfliessenden Ströme entsprechende Messgrösse (Summenstromsignal, Sperrgrösse) verwendet. Dabei ist von der Erkenntnis ausgegangen, dass zur Strommessung verwendete Stromwandler nach Eintritt eines Kurzschlusses nicht sofort gesättigt sind, sondern den Primärstrom noch eine kurze Zeit unverändert übertragen. Im Falle eines äusseren Kurzschlusses bleibt daher das Differenzstromsignal nach Eintritt des Kurzschlusses noch eine gewisse Zeit annähernd Null. Erst wenn mindestens ein Stromwandler in die Sättigung gerät, wird das Differenzstromsignal ungleich Null. Im Falle eines innenliegenden Kurzschlusses ist dagegen das Differenzstromsignal sofort ungleich Null. Das Messintervall des Differentialschutzes ist durch die Laufzeit einer monostabilen Kippstufe vorgegeben. Die Dauer dieses Messintervalls beträgt mindestens 1,5 ms nach Eintritt eines Kurzschlusses. Während dieses Messintervalls wird bestimmt, ob es sich um einen innen- oder aussenliegenden Kurzschluss handelt. Wenn es sich um einen aussenliegenden Kurzschluss handelt, wird die Auslösung eines Fehlersignals oder eines Auslösegliedes während mehrerer Perioden gesperrt. Durch eine langzeitige Sperrung der Auslösung wird der Schutzlangsam. Ein aussenliegender Fehler kann durch Überschlag zu einem innenliegenden Fehler führen, der dann erst spät bemerkt wird.

Differentialschutzverfahren und entsprechende Einrichtungen der vorgenannten Art sind ferner bekannt aus « Selektivschutz elektrischer Anlagen », Leonhard Müller, 1971, Verlags- und Wirtschaftsgesellschaft der Elektrizitätswerke mbH, Frankfurt/Main, Seiten 78-83. Es handelt sich hier um den Differentialschutz im engeren Sinne, d. h. um den Differentialschutz eines in einem einfachen Leitungszug angeordneten Schutzobjektes, wobei also im Gegensatz zum Sammelschienenschutz nur zwei Messströme beiderseits des Schutzobjektes zu erfassen sind. Hier kann ein Differenzstromsignal als Mass der Differenz des jeweils dem Schutzobjekt zufliessenden und von diesem abfliessenden Stromes in einfacher Weise als Differenz der in einer Durchströmrichtung des Leitungszuges mit übereinstimmenden Vorzeichen bewerteten Stromsignals gebildet werden.

Dies ist beim Sammelschienenschutz mit einer Vielzahl von mit wechselnder Durchströmrichtung bzw. Energieübertragungsrichtung betreibbaren Abgängen nicht ohne weiteres möglich, weshalb dort an die Stelle einer Differenzstrombildung sinngemäss eine vektorielle Summenstrombildung mit übereinstimmender Vorzeichenbewertung in Zuströmrichtung oder Abströmrichtung für alle betroffenen Abgänge tritt. Bei allen diesen Schutzverfahren ist der Differenzstrom bezüglich der Durchströmrichtung bzw. der vektorielle Summenstrom in Zuström- oder Abströmrichtung im störungsfreien Fall Null, weshalb grundsätzlich das Problem der Vortäuschung eines Kurzschlusses durch einseitige bzw. unsymmetrische Wandlersättigung an den Strom-Messgliedern besteht. Solche Fehlauslösungen werden u. a. von hohen Durchgangsströmen verursacht, wie sie bei aussenliegenden Kurzschlüssen auftreten können.

Dem Problem dieser Fehlauslösungen kann in bekannter Weise durch Stabilisierung des Differentialschutzes entgegengewirkt werden, beispielsweise durch Einführung eines der Auslösung entgegenwirkenden Haltesystems, das mit der geometrischen Summe der (wiederum in Durchströmrichtung gleichermassen mit übereinstimmendem Vorzeichen bewerteten) Ströme beiderseits des Schutzobjektes gespeist wird. Wegen der damit verbundenen Empfindlichkeitsverminderung gegenüber Differenzströmen, die beispielsweise bei Windungs- oder Lagenkurzschluss in Transformatoren und Generatoren vergleichsweise gering bleiben, ist darüberhinaus eine Anpassung der Differenzstrom-Auslösekennlinien mit nichtlinearem Verlauf an die Verhältnisse bei verschiedenen Differenzstrombereichen bekannt geworden (siehe die vorgenannte Literaturstelle). Alle diese Lösungen sind mit mehr oder weniger grossem Aufwand verbunden und erhöhen nach wie vor grundsätzlich im Bereich grösserer Empfindlichkeit die Gefahr von Fehlauslösungen, während in dem Kennlinienbereich mit geringerer Empfindlichkeit eine verminderte Kurzschluss-Abschaltsicherheit in Kauf genommen werden muss.

Ausserdem ist dem Problem der Differenzstrom-Vortäuschung durch Wandlersättigung noch durch Stabilisierung der Strom-Kurvenform mit Hilfe von Integratoren entgegengetreten worden, die den einmal erreichten Stromsignalwert unabhängig von einem Abfall durch Wandlersättigung aufrecht erhalten (siehe Brown Boveri Mitteilungen, Band 53, 1966, Nr. 4/5, Seite 330, rechte Spalte). Diese Lösung macht jedoch eine besondere Integrator-Rückstellung bei den jeweils nachfolgenden Nulldurchgängen erforderlich und ist daher wiederum mit an sich unerwünscht hohem Aufwand verbunden.

Die Erfindung, wie sie in den Ansprüchen gekennzeichnet ist, löst die Aufgabe, einen schnelleren Differentialschutz anzugeben, der gegenüber Wandlersättigungen unempfindlich ist.

Ein Vorteil der Erfindung besteht in der grösseren Sicherheit der Fehlererfassung, da Differenzströme unterhalb eines vorgebbaren Grenzwerts von der Fehlerauswertung nicht erfasst werden. Nach einem Auftreten eines aussenliegenden Fehlers wird bereits nach einer Periode die Erfassung eines neuen Fehlers möglich.

Weitere Merkmale und Vorteile der Erfindung werden anhand eines in den Zeichnungen dargestellten Ausführungsbeispiels erläutert. Hierin zeigt :

Figur 1 ein Übersichtsschaltbild eines Differentialschutzes für einen Transformator mit einer erfindungsgemässen Differenzstrom-Überwachungsschaltung,

Figur 2 das Wirkschaltbild der Differenzstrom-Überwachungsschaltung und

Figur 3 bzw. Figur 4 je ein Mehrfach-Signal-Zeitdiagramm zur Arbeitsweise der Überwachungsschaltung bei fehlerbedingtem bzw. sättigungsbedingtem Differenzstromsignal.

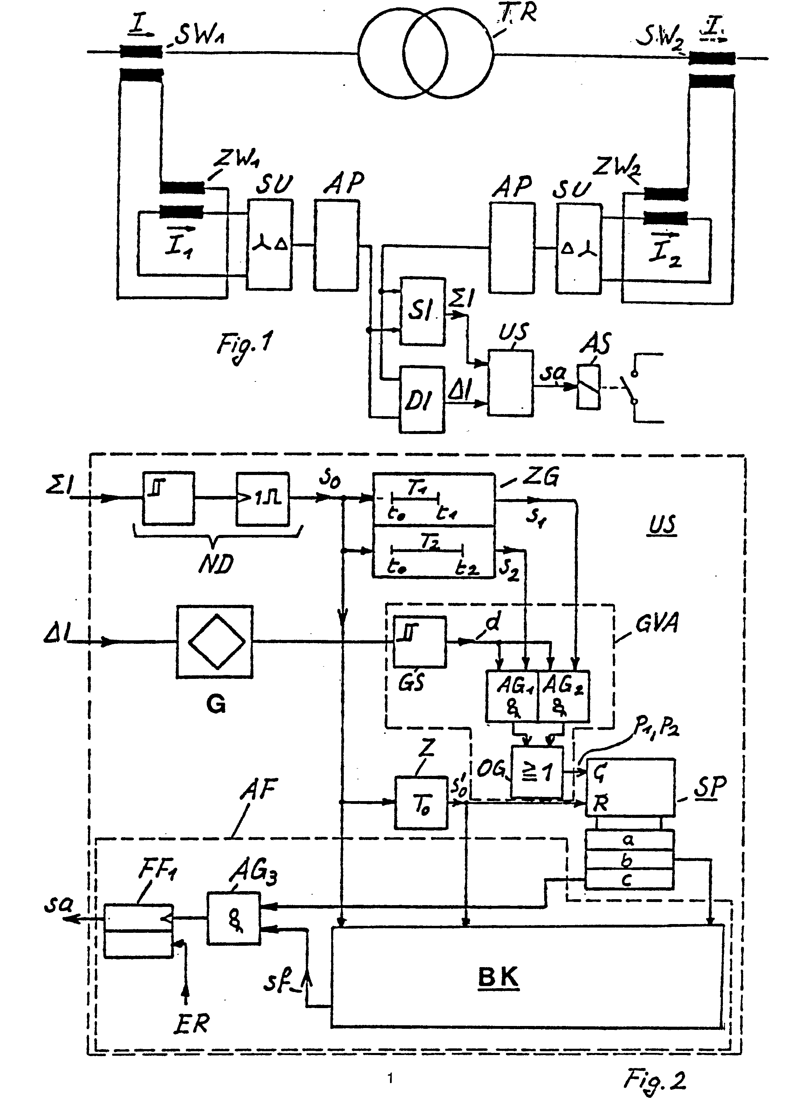

In der Schaltung nach Fig. 1 ist ein über einen Transformator TR als Schutzobjekt verlaufender Leitungsabschnitt durch Strom-Wandler $SW_1$, $SW_2$ abgegrenzt. Die Zählpfeile des Leitungsstromes I sind entsprechend der Durchströmrichtung im störungsfreien Betrieb gleichsinnig gewählt. Über übliche Zwischenwandler $ZW_1$, $ZW_2$ ergeben sich entsprechende Stromsignale $I_1$ und $I_2$, die über ebenfalls an sich übliche Stern-Dreieckumsetzer SU sowie Anpassschaltungen AP einem Summenstrombildner SI und einem Differenzstrombildner DI zugeführt werden. Das hieraus erhaltene Differenz- bzw. Summenstromsignal $\Delta I$ bzw. $\Sigma I$ wird einer Überwachungsschaltung US mit Auslöseglied AS für die Fehlerabschaltung zugeführt.

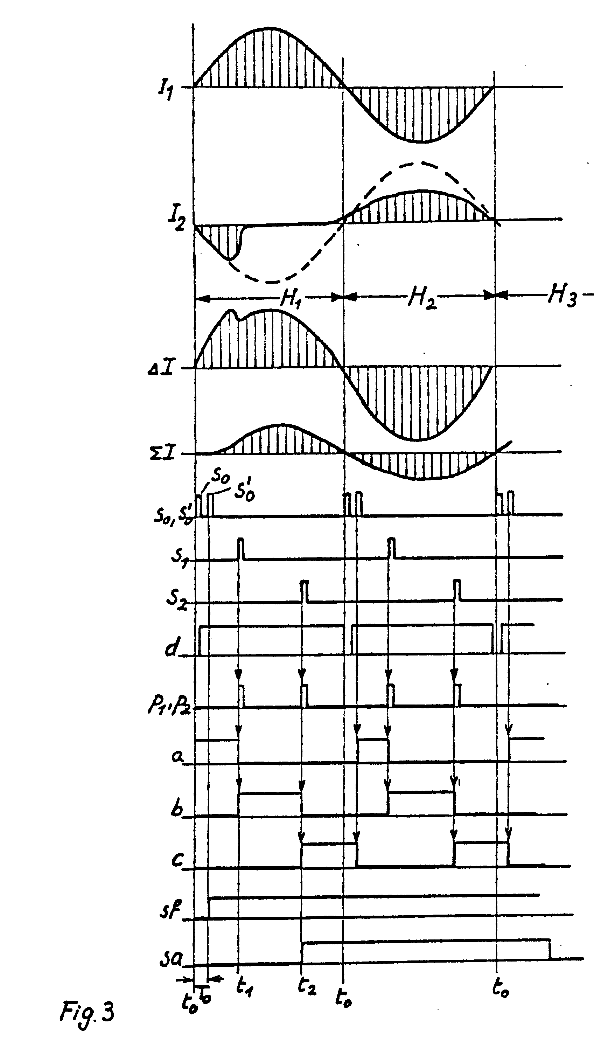

Nach Fig. 2 gelangt das Summenstromsignal $\Sigma I$ zunächst an einen Nulldurchgangs-Detektor ND, der aus einem Trigger mit nachfolgendem Monoflop besteht und bei den Strom-Nulldurchgängen je ein impulsförmiges Taktsignal $s_0$ zur Markierung des Beginnes einer jeden zu überwachenden Strom-Halbperiode liefert. Durch diese Taktsignale wird ein Zeitgeber ZG angesteuert, der jeweils beginnend mit dem Startzeitpunkt $t_0$ einer Halbperiode zwei Abtastintervalle $T_1$ und $T_2$ bestimmt. Zum Endzeitpunkt $t_1$ bzw. $t_2$ der beiden Abtastintervalle erscheint am Ausgang des Zeitgebers an getrennten Ausgängen ein Abtastsignal $s_1$ bzw. $s_2$. Im Schaltungsblock von ZG sind die beiden Abtastintervalle mit ihren Start- und Endzeitpunkten diagrammartig angedeutet.

Das der Überwachungsschaltung US zugeführte Differenzstromsignal $\Delta I$ gelangt über einen Vollweg-Gleichrichter G an eine Grenzwertvergleichs- und Abtastschaltung GVA, die auch mit den Abtastsignalen $s_1$ und $s_2$ beaufschlagt wird. Innerhalb dieser Schaltung wird zunächst das Differenzstromsignal mittels eines Grenzwertschalters GS auf Überschreitung eines den Störpegel ausschliessenden Grenzwertsignals bzw. Schwellenwertes geprüft und bei Grenzwertüberschreitung in ein binäres Differenzsignal d umgesetzt. Letzteres wird sodann in zwei Und-Gattern $AG_1$ und $AG_2$ durch die Signale $s_1$ und $s_2$ aufeinanderfolgend abgetastet. Sofern zu den Abtastzeitpunkten $t_1$ bzw. $t_2$ eine Grenzwertüberschreitung des Differenzstromsignals und damit ein entsprechender binärer Wert des Differenzsignals d vorliegt, ergeben sich entsprechende, impulsförmige Grenzwert-Überschreitungssignale $p_1$ bzw. $p_2$, die in einem Oder-Gatter OG zeitlich überlagert und als Schaltsignale einem Eingang C eines als Speicherschaltung vorgesehenen Schieberegisters SP zugeführt werden. Dieses Register umfasst drei Stufen a, b und c, wobei die Stufe a im Ausganszustand durch ein Rückstellsignal $s_0'$ über einen Rückstelleingang R des Schieberegisters aktiviert wird. Dieses Rückstellsignal wird mit einer geringfügigen Zeitverzögerung $T_0$ von beispielsweise unter einer Millisekunde mittels eines entsprechenden Zeitgliedes Z aus den Taktsignalen $s_0$ erzeugt.

Bei Auftreten von Grenzwert-Überschreitungssignalen $p_1$ bzw. $p_2$ werden nacheinander die Stufen b bzw. c des Schieberegisters aktiviert und damit das einmalige oder zweimalige Auftreten von Grenzwertüberschreitungen des Differenzstromsignals zu den Abtastzeitpunkten markiert. Das Ergebnis dieser Abtastung wird durch eine Abfrageschaltung AF festgestellt und gegebenenfalls eine zweimalige Grenzwertüberschreitung innerhalb einer Halbperiode als Kennzeichen für einen inneren Fehler in ein Fehlersignal bzw. Auslösesignal sa umgesetzt. Hierzu ist der Ausgang der Schieberegisterstufe c über ein Und-Gatter $AG_3$ an einen dynamischen Setzeingang eines binären Speichergliedes $FF_1$ angeschlossen, welches im Setzzustand das erwähnte Auslösesignal saliefert. Die Rücksetzung nach Fehlerabschaltung erfolgt in an sich üblicher Weise über einen externen Rückstellkanal ER.

Bei nur einmaligem Auftreten einer Grenzwertüberschreitung des Differenzstromsignals wird innerhalb einer Halbperiode lediglich ein Grenzwert-Überschreitungssignal $p_2$ zum Zeitpunkt $t_2$ erzeugt und damit nur die Stufe b des Schieberegisters aktiviert. Dies bedeutet das Auftreten eines Differenzstromes infolge Wandlersättigung bei aussenliegendem Fehler. Ein Auslösesignal wird hierbei nicht erzeugt, jedoch soll die Überwachung oder Auslösung in der jeweils nächstfolgenden Halbperiode gesperrt werden, weil in einer solchen nachfolgenden Halbperiode im allgemeinen auch ein Sättigungs-Differenzstrom beträchtlicher Grösse unmittelbar nach dem Anfangs-Nulldurchgang auftritt und zu einer Fehlauslösung führen könnte. Hierzu wird der Ausgang der Stufe b in einer Blockierschaltung BK jeweils bei einem Taktsignal $s_0$ abgefragt und in ein nicht dargestelltes Blockiersignal umgesetzt. Dieses Blockiersignal wird in der Blockierschaltung BK in der Weise festgehalten, dass ein im Normalfall am Ausgang dieser Blockierschaltung auftretendes Freigabesignal sf inhibiert wird. Dieses Freigabesignal liegt im Normalfall am bereits erwähnten Und-Gatter $AG_3$ und ermöglicht das Setzen des Speichergliedes $FF_1$ mit Erzeugung des Auslösesignals sa. Jeweils nach Ablauf der betreffenden Halbperiode wird das Blockiersignal durch das Rückstellsignal ıs₀' aufgehoben sowie das Freigabesignal sf wieder aktiviert.

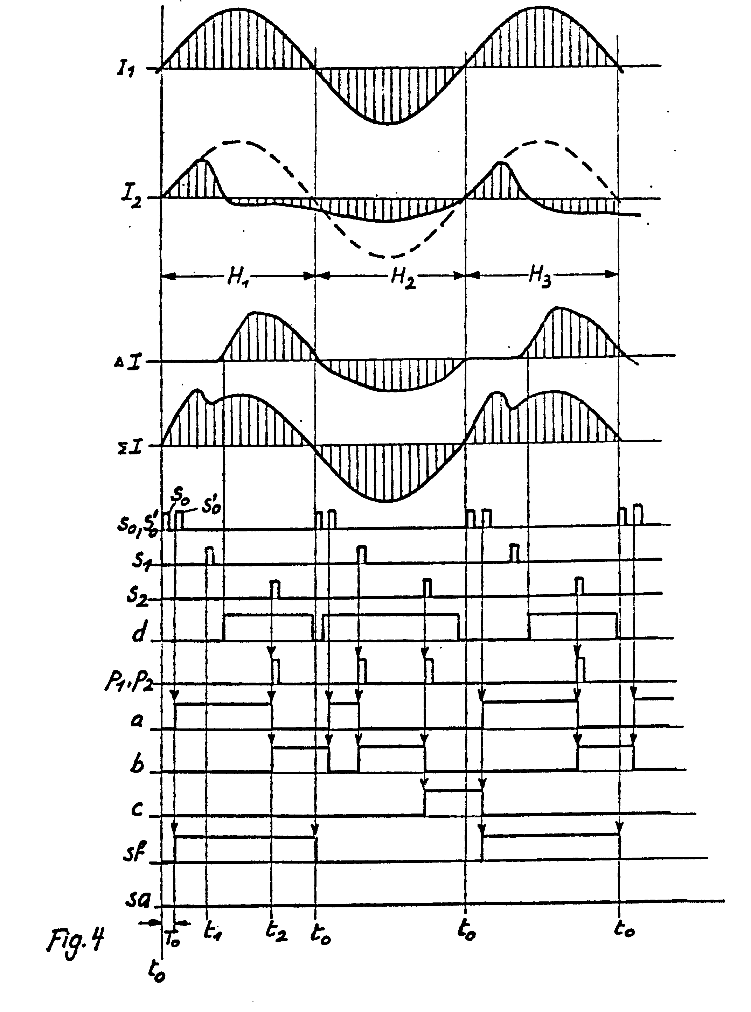

In den Zeitdiagrammen gemäss Fig. 3 und 4 sind jeweils für das Auftreten eines fehlerbedingten Differenzstromes bzw. eines sättigungsbedingten Differenzstromes die Messstromsignale $I_1$ und $I_2$ sowie das Differenzstromsignal $\Delta I$ und Summenstromsignal $\Sigma I$ für drei aufeinanderfolgende Halbwellen $H_1$, $H_2$ und $H_3$ dargestellt. In den weiteren Diagrammzeilen sind die Zeitverläufe der verschiedenen Signale, wie vorstehend anhand der Schaltung nach Fig. 2 erläutert, in Zuordnung zu den vorgenannten Stromsignalen dargestellt, und zwar sinngemäss für fehlerbedingten Differenzstrom mit Erzeugung eines Auslösesignals sa sowie für sättigungsbedingten Differenzstrom ohne Erzeugung eines solchen Signals. Der Ablauf und die Zuordnung der verschiedenen Signale sind mittels durchgehender, vertikaler Markierungslinien und entsprechender Wirkungspfeile in Übereinstimmung mit der erläuterten Arbeitsweise der Überwachungsschaltung angedeutet.

Die beiden Abtastzeitpunkte $t_1$ und $t_2$ liegen, wie aus den Diagrammzeilen für $s_1$ und $s_2$ hervorgeht, jeweils innerhalb der ersten und zweiten Hälfte einer Messstromhalbperiode. Erfahrungsgemäss hat sich eine Einstellung von $t_1$ in einem Zeitbereich zwischen 2 und 3 ms sowie für $t_2$ in einem Zeitbereich zwischen 5 und 8 ms nach Beginn der jeweiligen Halbperiode als besonders zweckmässig erwiesen.

**Ansprüche**

1. Verfahren für den Differentialschutz von elektrischen Anlagen als Schutzobjekten

a) bei dem beiderseits des Schutzobjektes in Abhängigkeit von dem Strom durch das Schutzobjekt Stromsignale ($I_1$, $I_2$) gebildet werden, mit übereinstimmendem Vorzeichen in Durchströmrichtung,

b) bei dem aus den beiden Stromsignalen ein Differenzstromsignal ($\Delta I$) erzeugt und

c) in Abhängigkeit von diesem Differenzstromsignal als Auslösegrösse ein Auslösesignal (sa) erzeugt wird,
dadurch gekennzeichnet,

d) dass jeweils innerhalb einer Messstrom-Halbperiode ($H_1$, $H_2$, $H_3$) zwei aufeinanderfolgende Grenzwertvergleiche ($t_1$, $t_2$) des Differenzstromsignals ($\Delta I$) durchgeführt werden,

e) dass das Auslösesignal (sa) für ein Auslöseglied (AS) in Abhängigkeit von einer Doppel-Grenzwertüberschreitung ($t_1$, $t_2$) des Differenzstromsignals ($\Delta I$) innerhalb einer Messstrom-Halbperiode erzeugt und

f) bei Auftreten nur einer Grenzwertüberschreitung ($t_2$) des Differenzstromsignals ($\Delta I$) innerhalb der folgenden Messstrom-Halbperiode gesperrt wird.

2. Verfahren nach Anspruch 1, dadurch gekennzeichnet, dass die aufeinanderfolgenden Grenzwertvergleiche des Differenzstromsignals ($\Delta I$) innerhalb der ersten und zweiten Hälfte der zu überwachenden Messstrom-Halbperiode ($H_1$, $H_2$, $H_3$) durchgeführt werden.

3. Verfahren nach Anspruch 2, dadurch gekennzeichnet, dass der erste Differenzstrom-Grenzwertvergleich ($t_1$) in einem Zeitbereich zwischen 2 ms und 3 ms nach Beginn ($t_0$) der zu überwachenden Messstrom-Halbperiode ($H_1$, $H_2$, $H_3$) durchgeführt wird.

4. Verfahren nach Anspruch 2 oder 3, dadurch gekennzeichnet, dass der zweite Differenzstrom-Grenzwertvergleich ($t_2$) in einem Zeitbereich von 5 ms bis 8 ms nach Beginn der zu überwachenden Messstrom-Halbperiode ($H_1$, $H_2$, $H_3$) durchgeführt wird.

5. Verfahren nach einem der vorangehenden Ansprüche, dadurch gekennzeichnet, dass zur Markierung des Beginns einer Messstrom-Halbperiode jeweils vom Nulldurchgang eines Summenstromsignal ($\Sigma I$), welches aus den Messströmen ($I_1$, $I_2$) beiderseits des Schutzobjektes gebildet wird, jeweils ein Taktsignal ($s_0$) abgeleitet wird.

6. Einrichtung zur Durchführung des Verfahrens nach Anspruch 1 mit folgenden Merkmalen :

a) beiderseits des Schutzobjektes (TR) in dem zu überwachenden Stromkreis sind Strommessglieder ($SW_1$, $ZW_1$ ; $SW_2$, $ZW_2$) angeordnet,

b) die Strommessglieder sind an einen Differenzstrombildner (DI) für die Erzeugung eines Differenzstromsignals ($\Delta I$) angeschlossen,

c) dem Differenzstrombildner ist eine Überwachungsschaltung (US) nachgeordnet,

d) es ist ein mit den Messstrom-Halbperioden ($H_1$, $H_2$, $H_3$) synchronisierter Zeitgeber (ZG) mit jeweils zwei in einer Halbperiode aufeinanderfolgenden Abtastsignalen ($s_1$, $s_2$) vorgesehen,

e) es ist eine mit dem Differenzstromsignal ($\Delta I$) und den Abtaststignalen ($s_1$, $s_2$) beaufschlagte Grenzwertvergleichs- und Abtastschaltung (GVA) vorgesehen, in der das Differenzstromsignal auf eine Grenzwertüberschreitung geprüft wird und an der ausgangsseitig binäre Grenzwertüberschreitungssignale ($p_1$, $p_2$) anliegen, wenn während der Dauer der Abtastsignale ($s_1$, $s_2$) gleichzeitig eine Grenzwertüberschreitung des Differenzstromsignals (I) vorliegt,

f) der Grenzwertvergleichs- und Abtastschaltung (GVA) ist eine Speicherschaltung (SP) mit mehreren Speicherplätzen (a, b, c) für die Aufnahme der Grenzwert-Überschreitungssignale (p₁, p₂) nachgeordnet,

g) der Speicherschaltung (SP) ist eine Abfrageschaltung (AF) zur Überwachung auf ein zwei-maliges Auftreten von Grenzwert-Überschrei-tungssignalen (p₁, p₂) innerhalb einer Messstrom-Halbperiode (H₁, H₂, H₃) als Fehlerkennzeichen nachgeordnet,

h) die Abfrageschaltung (AF) weist eine durch nur einmalige Differenzstrom-Grenzwert-überschreitung innerhalb einer Messstrom-Grenz-wertüberschreitung innerhalb einer Messstrom-Halbperiode (H₁) aktivierbare Blockierschaltung (BK) für die Sperrung der Überwachung oder Fehlersignalauslösung in der jeweils nächstfolgenden Messstrom-Halbperiode (H₂) auf.

7. Einrichtung nach Anspruch 6, dadurch gekennzeichnet, dass ein mit den beiderseits des Schutzobjektes (TR) gebildeten Messstromsigna-len (I₁, I₂) beaufschlagter Summenstrombildner (SI) mit nachgeordnetem Nulldurchgangsdetektor (ND) für die Erzeugung von den Messstrom-Halbperioden zugeordneten Taktsignalen (s₀) vorgesehen ist.

**Claims**

1. A method for the differential protection of electric installations which are the objects to be protected,

a) in which method, on both sides of the object to be protected, current signals (I₁, I₂) are formed as a function of the current flowing through the object to be protected, these currents having identical signs in the direction of flow,

b) in which method a differential current signal (ΔI) is generated from the two current signals and

c) as a trigger value, a trigger signal (sa) is generated as a function of this differential current signal,
characterised in

d) that in each case two successive limit-value comparisons (t₁, t₂) of the differential current signal (ΔI) are performed within one half period (H₁, H₂, H₃) of the measuring current,

e) that the trigger signal (sa) for one trigger section (AS) is generated as a function of a dual limit-value transgression (t₁, t₂) of the differential current signal (ΔI) within one half period of the measuring current, and

f) the blocking function is actuated within the subsequent half period of the measuring current if only one limit value transgression (t₂) of the differential current signal (ΔI) occurs.

2. A method according to Claim 1, characterised in that the successive limit-value comparisons of the differential current signal (ΔI) are carried out within the first and second half of the measuring current half period (H₁, H₂, H₃) to be monitored.

3. A method according to Claim 2, characterised in that the first differential current limit-value comparison (t₁) is carried out within a range of time of between 2 ms and 3 ms after the be-ginning (t₀) of the measuring current half period (H₁, H₂, H₃) to be monitored.

4. A method according to Claim 2 or 3, characterised in that the second differential-current limit value comparison (t₂) is carried out within a range of time of between 5 ms and 8 ms after the beginning of the measuring-current half period (H₁, H₂, H₃) to be monitored.

5. A method according to one of the preceding claims, characterised in that for the purpose of marking the beginning of a measuring-current half period, in each case from the zero transition of a sum current signal (ΣI) formed from the measuring currents (I₁, I₂) on both sides of the object to be protected, in each case a clock signal (s₀) is derived.

6. A device for carrying out the method according to Claim 1, having the following features :

a) on both sides of the object to be protected (TR), in the circuit to be monitored, current measuring sections (SW₁, ZW₁ ; SW₂, ZW₂) are arranged,

b) the current measuring sections are connected to a differential current source (DI) for generating a differential current signal (ΔI),

c) the differential current source is followed by a monitoring circuit (US),

d) a time generator (ZG), which is synchronised with the measuring-current half periods (H₁, H₂, H₃) is provided with in each case two sampling signals (s₁, s₂) which follow each other in one half period,

e) a limit-value comparison and sampling circuit (GVA) is provided to which the differential current signal (ΔI) and the sampling signals (s₁, s₂) are applied and in which the differential current signal is checked for a transgression of limit values and at the output of which binary limit-value transgression signals (p₁, p₂) are present if, during the duration of the sampling signals (s₁, s₂), a limit value transgression of the differential current signal (I) is simultaneously present,

f) the limit value comparison and sampling circuit (GVA) is followed by a storage circuit (SP) having several storage locations (a, b, c) for storing the limit-value transgression signals (p₁, p₂),

g) the storage circuit (SP) is followed by an interrogating circuit (AF) for monitoring for a double occurrence of limit-value transgression signals (p₁, p₂) within one measuring-current half period (H₁, H₂, H₃) as fault identifier,

h) the interrogating circuit (AF) is provided with a blocking circuit (BK), which can be activated by a single differential-current limit value transgression only within one measuring current half period (H₁), for blocking the monitoring or fault signal triggering in the respective next following measuring current half period (H₂).

7. A device according to Claim 6, characterised in that a sum current source (SI), to which the measuring current signals ($I_1$, $I_2$) formed on both sides of the object to be protected (TR) are applied, with following zero-transition detector (ND) is provided for generating clock signals ($s_0$) which are associated with the measuring current half periods.

## Revendications

1. Procédé pour la protection différentielle d'installations électriques en tant qu'objets à protéger, suivant lequel

a) de part et d'autre de l'objet à protéger en fonction du courant traversant l'objet à protéger sont formés des signaux de courant ($I_1$, $I_2$) de signes correspondants dans le sens du passage du courant,

b) un signal de courant de différence ($\Delta I$) est produit à partir des deux signaux de courant, et

c) en fonction de ce signal de courant de différence un signal de déclenchement (sa) est produit en tant que grandeur de déclenchement, caractérisé en ce que

d) dans une demi-période de courant de mesure ($H_1$, $H_2$, $H_3$), deux comparaisons de valeurs limite successives ($t_1$, $t_2$) du signal de courant de différence ($\Delta I$) sont chaque fois effectuées,

e) le signal de déclenchement (sa) pour un élément de déclenchement (AS) est produit en fonction d'un double dépassement de valeur limite ($t_1$, $t_2$) du signal de différence de courant ($\Delta II$) dans une demi-période de courant de mesure, et

f) dans le cas d'un seul dépassement de valeur limite ($t_2$) du signal de courant de différence ($\Delta I$) dans la demi-période de courant de mesure suivante un blocage intervient.

2. Procédé suivant la revendication 1, caractérisé en ce que les comparaisons de valeurs limite successives du signal de courant de différence ($\Delta I$) sont effectuées dans la première et la seconde moitié de la demi-période de courant de mesure ($H_1$, $H_2$, $H_3$) à surveiller.

3. Procédé suivant la revendication 2, caractérisé en ce que la première comparaison de valeurs limite de courant de différence ($t_1$) est effectuée en une durée comprise entre 2 ms et 3 ms après le début ($t_0$) de la demi-période de courant de mesure ($H_1$, $H_2$, $H_3$) à surveiller.

4. Procédé suivant la revendication 2 ou 3, caractérisé en ce que la seconde comparaison de valeur limite de courant de différence ($t_2$) est effectuée en une durée comprise entre 5 ms et 8 ms après le début de la demi-période de courant de mesure ($H_1$, $H_2$, $H_3$) à surveiller.

5. Procédé suivant l'une quelconque des revendications précédentes, caractérisé en ce que, pour marquer le début d'une demi-période de courant de mesure, un signal de synchronisation ($s_0$) est chaque fois dérivé du passage par zéro d'un signal de courant de somme ($\Sigma I$) formé à partir des courants de mesure ($I_1$, $I_2$) de part et d'autre de l'objet à protéger.

6. Dispositif pour l'exécution du procédé suivant la revendication 1 présentant les caractéristiques suivantes :

a) de part et d'autre de l'objet à protéger (TR) des éléments de mesure de courant ($SW_1$, $ZW_1$ ; $SW_2$, $SW_2$) sont disposés dans le circuit à surveiller ;

b) les éléments de mesure de courant sont connectés à un générateur de courant de différence (DI) pour la production d'un signal de courant de différence ($\Delta I$),

c) un circuit de surveillance (US) est monté en aval du générateur de courant de différence,

d) un générateur de signaux d'horloge (ZG) synchronisé avec les demi-périodes de courant de mesure ($H_1$, $H_2$, $H_3$) présentant chaque fois deux signaux d'analyse ($s_1$, $s_2$) se suivant dans une demi-période est prévu,

e) un circuit de comparaison de valeur limite et d'analyse (GVA) alimenté par le signal de courant de différence ($\Delta I$) et les signaux d'analyse ($s_1$, $s_2$) est prévu dans lequel il est vérifié si le signal de courant de différence dépasse une valeur limite et, à la sortie duquel sont présents des signaux binaires de dépassement de valeur limite ($P_1$, $P_2$), lorsque, pendant la durée des signaux d'analyse ($s_1$, $s_2$), un dépassement de valeur limite du signal de courant de différence ($\Delta I$) est simultanément présent,

f) le circuit de comparaison de valeur limite et d'analyse (GVA) est suivi d'un circuit de mémoire (SP) comportant plusieurs emplacements de mémoire (a, b, c) pouvant recevoir les signaux de dépassement de valeur limite ($p_1$, $p_2$),

g) le circuit de mémoire (SP) est suivi d'un circuit d'interrogation (AF) surveillant une double apparition de signaux de dépassement de valeur limite ($p_1$, $p_2$) au cours d'une demi-période de courant de mesure ($H_1$, $H_2$, $H_3$) en tant que signe distinctif d'erreur,

h) le circuit d'interrogation (AF) présente un **circuit de blocage (BK) ne pouvant être activé que par un dépassement de valeur limite de courant de différence unique au cours d'une demi-période de courant de mesure ($H_1$) pour le blocage de la surveillance ou du déclenchement d'un signal d'erreur dans la demi-période de courant de mesure ($H_2$) suivante.**

7. Dispositif suivant la revendication 6, caractérisé en ce qu'un formateur de courant de somme (SI) alimenté par les signaux de courant de mesure ($I_1$, $I_2$) formés de part et d'autre de l'objet à protéger (TR) suivi d'un détecteur de passage par zéro (ND) est prévu pour produire des signaux de synchronisation ($s_0$) associés aux demi-périodes de courant de mesure.

0 045 105

Fig.1

Fig.2

Fig. 3

Fig. 4